# EUROPÄISCHE PATENTSCHRIFT

(11) **EP 0 697 303 B1**
(45) Veröffentlichungstag und Bekanntmachung des Hinweises auf die Patenterteilung: **22.10.1997**
(21) Anmeldenummer: 95112187.0
(22) Anmeldetag: 03.08.1995
(51) Int. Cl.: B60K 41/28, A01B 63/02

(54) **Steuereinrichtung für Arbeitsfahrzeug**
Control for an industrial vehicle
Commande pour un véhicule de travail

(30) Priorität: 16.08.1994 DE 4428824
(43) Veröffentlichungstag der Anmeldung: 21.02.1996
(73) Patentinhaber: DEERE & COMPANY, Moline, Illinois 61265 (US)
(72) Erfinder: Hollstein, Jürgen, D-68259 Mannheim (DE)
(74) Vertreter: Feldmann, Bernhard

(56) Entgegenhaltungen:
- WO-A-82/01354
- DE-A- 2 451 314
- DE-A- 2 901 318
- FR-A- 2 554 308
- ÖLHYDRAULIK UND PNEUMATIK, Bd. 36, Nr. 3, 1992, MAINZ DE, Seiten 139-147, XP000257198 ESDERS ET AL.: "Hydraulik in Traktoren und Landmaschinen-Neues von der Agritechnica 91"

## Beschreibung

Die Erfindung betrifft eine Steuereinrichtung zur Ansteuerung wenigstens eines Steuergerätes eines Arbeitsfahrzeuges gemäß dem Oberbegriff des Patentanspruchs 1.

Bei landwirtschaftlichen, kommunalen und Nutzfahrzeugen können als Steuereinrichtung beispielsweise Kupplungen für die Zuschaltung eines Vorderradantriebes in den Antriebsstrang, für eine Hinterachsdifferentialsperre und für eine am Fahrzeugheck angeordnete Zapfwelle vorgesehen sein. Es können jedoch auch weitere Funktionen einbezogen sein, wie beispielsweise eine vordere Zapfwelle, ein Mitten- und Frontdifferential und Zusatzsteuergeräte am Arbeitsfahrzeug oder an einem an diesem angebauten Arbeitsgerät.

Die Steuereinrichtungen lassen sich von der Bedienungsperson vom Bedienungsstand aus über Steuerelemente, z. B. Steuerschalter ansteuern, um die gewünschte Funktion zu steuern und insbesondere ein- oder auszuschalten. Neben der Bedienung dieser Steuerelemente muß die Bedienungsperson das Lenkrad, das Gas- und Bremspedal, die Hauptkupplung, die Gangschalthebel und viele weitere Bedienungselemente bedienen, um das Fahrzeug zu führen. Die Vielzahl der Bedienungen erfordert von der Bedienungsperson eine hohe Konzentration. Dies trifft insbesondere auch für Arbeiten mit sich ständig wiederholenden gleichförmigen Arbeitsschritten zu.

Beispielsweise muß die Bedienungsperson beim Pflügen oder anderen Arbeiten auf dem Feld den Arbeitsverbund Traktor/Gerät am Feldende wenden und hierfür eine Reihe von Arbeitsschritten auslösen, in dem die entsprechenden Steuerelemente betätigt werden. Zum Wenden wird beispielsweise das Arbeitsgerät ausgehoben, die Hinterachsdifferentialsperre ausgerückt, die Zapfwelle ausgeschaltet und der mechanische Frontantrieb abgeschaltet. Nach dem Wenden werden die Steuerelemente erneut betätigt, um den ursprünglichen Zustand wieder einzustellen.

Aus der DE-Z: "Hydraulik in Traktoren und Landmaschinen - Neues von der Agritechnica '91", Ölhydraulik und Pneumatik 36 (1992) Nr. 3, Seiten 139 bis 147 ist eine Steuereinrichtung nach dem Oberbegriff des Anspruchs 1 bekannt, durch die vier verschiedene Schaltstufen wählbar sind, um den Allradantrieb, die Differentialsperren und Zapfwellen automatisch zu steuern. In der Stufe 1 schaltet sich der Allradantrieb in Abhängigkeit des Radeinschlags und der Fahrgeschwindigkeit automatisch aus und wieder zu. In der Stufe 2 ist der Allradantrieb permanent eingeschaltet. In der 3. Schaltstufe sind der Allradantrieb und die Differentialsperren so geschaltet, daß beim Wendemanöver am Feldende, nach Betätigung eines Schnellaushubes am Bedienungspult einer elektrohydraulischen Hubwerksregelung, der Allradantrieb und die Differentialsperren abgeschaltet und beim erneuten Absenken des Gerätes nach dem Wendevorgang wieder eingeschaltet werden. In der 4. Schaltstufe sind Allradantrieb und Differentialsperren permanent geschaltet. Durch einen vierstufigen Schalter sind lediglich vier unterschiedliche Betriebsweisen des Allradantriebs und der Differentialsperren einstellbar. Ferner läßt die 3. Schaltstufe lediglich eine gemeinsame automatische Betriebsweise für den Allradantrieb und die Differentialsperren bei Wendemanövern am Feldende zu. Hierdurch sind die Möglichkeiten eingeschränkt. Es sind jedoch automatische Betriebsweisen wünschenswert, bei denen die einbezogenen Funktionen auswählbar sind.

Die der Erfindung zugrunde liegende Aufgabe wird darin gesehen, eine Steuereinrichtung der eingangs genannten Art anzugeben, bei der die genannten Probleme überwunden werden und bei der insbesondere einzelne Funktionen wahlweise in den Automatikmodus einbeziehbar sind. Das Arbeiten mit dem Arbeitsfahrzeug soll erleichtert, die Bedienungsperson soll entlastet und ihre Leistungsfähigkeit sowie die Produktivität des Arbeitsfahrzeuges sollen erhöht werden.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Die erfindungsgemäße Lösung führt zu einer Automatisierung von durch die Bedienungsperson vorzunehmenden Arbeitsschritten. Sie erleichtert das Arbeiten mit dem Arbeitsfahrzeug, entlastet die Bedienungsperson, steigert dessen Leistungsfähigkeit und erhöht die Produktivität des Arbeitsfahrzeuges.

Es wird vorgeschlagen, eine elektronische Steuereinheit einzusetzen, deren elektrische Anschlüsse mit einem gesonderten Automatikschalter und dem Steuersystem eines Anbaugerätehubwerkes in Verbindung stehen. Bei Betätigung des Automatikschalters wird ein Automatikmodus für auswählbare Funktionen aktiviert. Dabei erfolgt jedoch noch keine Änderung des Betriebszustandes der einbezogenen Funktionen. Durch manuelle Beeinflussung des Anbaugerätehubwerkes wird der Automatikmodus in Gang gesetzt. Bei der Durchführung des Automatikmodus lassen sich die ausgewählten Steuergeräte nach einem vorgebbaren Programm ansteuern. Damit hat die Bedienungsperson am Arbeitsbeginn, beispielsweise am Beginn der Feldarbeit, lediglich den Automatikmodus zu aktivieren. Die Auslösung und Durchführung der Arbeitsschritte erfolgt dann automatisch durch die manuelle Betätigung des Hubwerkes. Die Ansteuerung der Steuergeräte kann dabei nach einem vorgebbaren Programm und in Abhängigkeit der jeweiligen Hubwerkslage erfolgen.

Vorzugsweise werden bei der Rückstellung des Hubwerkssteuersystems in seine Ausgangslage die ausgewählten Steuergeräte automatisch nach einem vorgebbaren Programm in ihren jeweiligen Ausgangszustand zurückgestellt.

Ein bevorzugtes Anwendungsgebiet der Erfindung wird beim Wenden des Arbeitsverbundes Traktor/Gerät am Feldende gesehen, bei dem insbesondere ein Vorderradantrieb, eine Differentialsperre und/oder eine Zapfwelle zu betätigen sind, sofern am Feldende das Hubwerk mit dem Arbeitsgerät angehoben wird. Am Beginn der Feldarbeit kann durch die Bedienungsperson der Automatikmodus eingeschaltet werden. Am Feldende wird durch Umschalten des Hubwerksteuersystems das Hubwerk aus seiner Arbeitsposition in seine Transportstellung gehoben. Gleichzeitig wird die Differentialsperre ausgerückt, so daß ein Drehzahlausgleich zwischen den Antriebsrädern bei Kurvenfahrt möglich ist. Ist das Hubwerk um einen vorgebbaren Prozentsatz seines maximalen Hubwinkels aus der Arbeitsstellung ausgehoben, so wird die Zapfwelle abgeschaltet. Die Lage des Hubwerkes kann durch einen Hubwerkssensor erfaßt werden. Sobald die Lage des Hubwerkes eine einstellbare maximale Hubposition erreicht (Transportstellung), wird der Vorderradantrieb abgeschaltet. Falls nicht alle der genannten Funktionen beim Betätigen des Automatikschalters aktiv waren, wird durch die Steuereinheit ein entsprechend reduziertes Automatikprogramm ausgeführt.

Vorzugsweise erfolgt nach Beenden des Wendevorganges die Durchführung eines weiteren Steuerprogramms, das durch einen von der Bedienungsperson einzustellenden Hubwerkssenkbefehl ausgelöst wird und durch das der Frontantrieb und/oder die Differentialsperre automatisch wieder eingeschaltet werden. Damit werden die Funktionen, die in den Automatikmodus eingebunden sind und vor dem Ausheben aktiv waren, nach dem Wendevorgang wieder aktiv. Eine automatische Einschaltung der Zapfwelle wird jedoch aus Sicherheitsgründen nicht vorgenommen. Die Zapfwelle muß wie bisher durch manuelle Betätigung des Zapfwellensteuerelementes oder -schalters eingeschaltet werden.

Diese Anwendung der erfindungsgemäßen Steuereinrichtung erlaubt ein zügiges, die Bedienungsperson entlastendes Arbeiten auf dem Feld, bei dem die Bedienungsperson sich auch am Feldende auf das Fahren des Schleppers konzentrieren kann, und bei dem die durch die Bedienungsperson vorzunehmenden Manipulationen auf ein Minimum reduziert sind.

Die einmal in die Automatik eingebundenen Funktionen bleiben eingebunden, bis der Automatikschalter nochmals betätigt oder die Zündung des Fahrzeuges ausgeschaltet wurde. Der Automatikschalter ist zweckmäßiger Weise als Tastschalter ausgebildet, der Schaltimpulse zur Umschaltung zwischen einem normalen Betrieb, in dem alle Funktionen manuell einstellbar sind, und dem Automatikmodus an die Steuereinheit abgibt.

Jedoch ist es u. a. aus Sicherheitsgründen zweckmäßig, vorzusehen, daß die in den Automatikmodus eingebundenen Funktionen zu jedem Zeitpunkt durch manuelles Betätigen des jeweiligen Funktionselementes oder -schalters "überfahren" werden können. Dabei wird der Automatikmodus für die betroffene Funktion vorübergehend unterdrückt, und die Funktion ist durch die Bedienungsperson einstellbar. Bei einer nachfolgenden Betätigung des Automatikmodus werden die "überfahrenen" Funktionen (z. B. die Differentialsperre) wieder zeit- und zustandsrichtig in den Automatikmodus eingeführt.

Gemäß einer bevorzugten Ausgestaltung der Erfindung wird ein erfolgreiches Einbinden einer Funktion in den Automatikmodus der Bedienungsperson optisch und/oder akustisch angezeigt, um das vorhergehende Einbinden der einzelnen Funktionen in den Automatikmodus bzw. das Verlassen des Automatikmodus anzuzeigen.

Das Abschalten des Automatikmodus wird beispielsweise durch ein akustisches Signal angezeigt.

Vorzugsweise ist jeder Funktion wenigstens eine Anzeigeleuchte zugeordnet, die im normalen Betrieb bei eingeschalteter Funktion aufleuchtet und bei ausgeschalteter Funktion erlischt.

Ist die Funktion in den Automatikmodus eingebunden, so zeigt die Anzeigeleuchte durch einen charakteristischen Blinkmodus an, ob die Funktion ein- oder ausgeschaltet ist. Bei eingeschalteter Funktion (z. B. Zapfwelle dreht sich) blinkt die Anzeigeleuchte in einem Hellblinkmodus, in dem die Hellphasen länger als die Dunkelphasen sind. Beispielsweise blinkt die Anzeigeleuchte rhythmisch auf, und leuchtet bei einer Periodendauer von 1 Sekunde 90% der Periodenzeit auf und ist 10% der Periodenzeit aus. Bei ausgeschalteter Funktion (z. B. Zapfwelle steht) blinkt die Anzeigeleuchte in einem Dunkelblinkmodus, in dem die Hellphasen kürzer als die Dunkelphasen sind. Beispielsweise blinkt die Anzeigeleuchte rhythmisch auf, und leuchtet bei einer Periodendauer von 1 Sekunde 10% der Periodenzeit auf und ist 90% der Periodenzeit aus. Durch diese Leuchtenansteuerung können zwei zusätzliche Zustandsinformationen zu den normalen Leuchtenfunktionen (hell, dunkel) hinzugefügt werden.

Die Steuereinrichtung umfaßt vorzugsweise Überwachungsmittel, die die Funktionalität der in die Steuerung einbezogenen Bauelemente laufend überwachen und bei Auftreten von Fehlern, beispielsweise bei unsachgemäßer Bedienung oder bei Systemfehlern, die Anzeigeleuchte im Blinkmodus mit einem Puls-Pausen-Verhältnis von in etwa 1:1 ansteuert.

Um die Möglichkeit von Fehlbedienungen zu vermindern, werden insbesondere die Funktionen des mechanischen Frontantriebes und der Differentialsperre innerhalb des Automatikmodus nur bei Fahrgeschwindigkeiten unter einem vorgebbaren Wert, beispielsweise 12 km/h, beeinflußt. Dies soll verhindern, daß eine ungeübte Bedienungsperson bei erhöhten Geschwindigkeiten, die z. B. für ein Feld-Manöver untypisch sind, bei aktiviertem Automatikmodus durch automatisches Abschalten des Frontantriebes oder automatisches Zuschalten der Differentialsperre in einen kritischen Fahrzustand gelangt.

Ferner ist es von Vorteil, wenn die Steuereinheit bei Überschreiten einer vorgebbaren Fahrzeuggeschwindigkeit von beispielsweise 12 km/h die Zapfwelle automatisch abschaltet und das manuelle Wiedereinschalten solange unterbindet, bis die Fahrgeschwindigkeit unter den vorgebbaren Wert fällt. Die Differentialsperre wird bei Unterschreiten der Geschwindigkeitsschwelle nicht automatisch wieder zugeschaltet.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Schaltungsschema einer erfindungsgemäßen Steuereinrichtung,
- Fig. 2: ein Zustandsdiagramm der erfindungsgemäßen Steuerung,
- Fig. 3: einen Hellblinkmodus und
- Fig. 4: einen Dunkelblinkmodus.

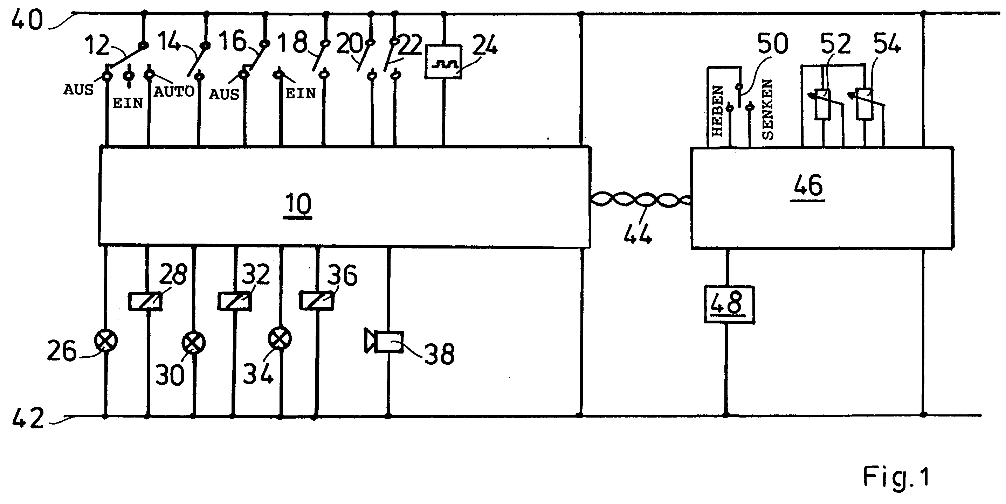

Die in Fig. 1 dargestellte Steuereinrichtung enthält eine elektronische Steuereinheit 10, deren Funktionen und Vorgaben programmierbar sind und die einen Festspeicher zum Speichern von Größen enthält. Die Steuereinheit 10 umfaßt ferner nicht näher dargestellte Signalumformer, Steuerrelais und dergleichen, die der elektrischen Anpassung der angeschlossenen Komponenten dienen. In Fig. 1 sind solche Bauelemente dargestellt, die für die erfindungsgemäße Steuereinrichtung notwendig oder zweckmäßig erscheinen. Eine für die Erfindung geeignete Steuereinheit kann jedoch noch weitere Anschlüsse und Funktionen enthalten.

An die Steuereinheit 10 ist ein Vierradantriebsschalter 12, ein Differentialsperrenschalter 14, ein Zapfwellenschalter 16, ein Automatikschalter 18, zwei Bremsschalter 20, 22, ein Fahrzeuggeschwindigkeitssensor 24, eine Vierradantriebsleuchte 26, ein Vierradantriebssteuermagnetventil 28, eine Differentialsperrenleuchte 30, ein Differentialsperrensteuermagnetventil 32, eine Zapfwellenleuchte 34, ein Zapfwellensteuermagnetventil 36 und eine akustische Warneinrichtung 38 angeschlossen. Die Steuereinheit 10 ist an die beiden Pole 40, 42 einer nicht näher gezeigten Fahrzeugbatterie angeschlossen.

Der Vierradantriebsschalter 12 ist manuell in stabile Schaltpositionen einstellbar. In der AUS- bzw. EIN-Stellung wird das Vierradantriebssteuermagnetventil 28 angesteuert, um den mechanischen Vorderradantrieb des Antriebsstranges aus- bzw. einzukuppeln. In der AUTO-Stellung erfolgt eine automatische Steuerung des Vierradantriebssteuermagnetventil 28 in Abhängigkeit der Fahrzeuggeschwindigkeit, des Lenkwinkels, der Bremsbetätigung und/oder der Kupplungsbetätigung etc., wie es beispielsweise in der EP-A-0 166 037, DE-C-36 33 399 und DE-A-38 37 357 beschrieben wurde.

Der Differentialsperrenschalter 14 ist als Taster ausgelegt, durch den die Bedienungsperson Steuersignale an das Differentialsperrenmagnetventil 32 zur Betätigung des Hinterachsdifferentials einstellen kann.

Bei dem Zapfwellenschalter 16 handelt es sich um einen zwischen einer EIN-Stellung und einer AUS-Stellung manuell einstellbaren Umschalter, der der Ansteuerung des Zapfwellenmagnetventils 36 dient.

Der Automatikschalter 18 ist als manuell betätigbarer Taster ausgelegt, durch den Umschaltsignale an die Steuereinheit 10 einstellbar sind, die die Steuereinheit 10 zwischen einem Normalbetriebsmodus und einem Automatikmodus umschalten.

Die beiden Bremsschalter 20 und 22 stehen mit den nicht dargestellten Betriebsbremsen des Fahrzeugs in Verbindung und werden durch das Bremsen betätigt.

Die Vierradantriebsleuchte 26, die Differentialsperrenleuchte 30 und die Zapfwellenleuchte 34, zeigen den Betriebszustand der zugehörigen, nicht näher gezeigten Funktionen (Vierradantrieb, Differentialsperre und Zapfwelle) an. Sind die Leuchten 26, 30, 34 dauerhaft ein- bzw. ausgeschaltet, so zeigen sie an, daß die zugehörige Funktion im Normalbetriebsmodus ein- bzw. ausgeschaltet ist. Die Leuchten 26, 30, 34 können auch im Hellblinkmodus oder im Dunkelblinkmodus aufblinken. Der Hellblinkmodus zeigt an, daß der Automatikmodus aktiviert und die in die Automatik eingebundene Funktion eingeschaltet ist. Der Dunkelblinkmodus zeigt an, daß der Automatikmodus aktiviert und die in die Automatik eingebundene Funktion ausgeschaltet ist.

Das Vierradantriebssteuermagnetventil 28, das Differentialsperrensteuermagnetventil 32 und das Zapfwellensteuermagnetventil 36 stehen jeweils mit einer entsprechenden elektrohydraulischen Kupplung (nicht dargestellt) der zugehörigen Funktionen (Vierradantrieb, Differentialsperre und Zapfwelle) in Verbindung.

Die Steuereinheit 10 steht ferner über einen seriellen Bus 44 mit dem Steuersystem 46 für ein Anbaugerätehubwerk in Verbindung. Von dem Anbaugerätehubwerk ist lediglich ein Steuerventil 48 angedeutet, das den Hydraulikölstrom von und zu den Hubzylindern des Anbaugerätehubwerkes steuert, um dieses anzuheben und abzusenken. An das Steuersystem 46 des Anbaugerätehubwerkes, das ebenfalls durch die Fahrzeugbatterie 40, 42 gespeist wird, ist ein als mittenzentrierter Wippschalter ausgebildeter Bedienungsschalter 50 angeschlossen, durch den die Bedienungsperson Signale zum schnellen Heben bzw. Senken des Anbaugerätehubwerkes eingeben kann. Ferner sind ein mit dem Anbaugerätehubwerk verbundener Lagewandler 52 und ein Lagegrenzwertwandler 54 an das Steuersystem 46 des Anbaugerätehubwerkes angeschlossen. Die Lagewandler 52 und 54 können als verstellbare Potentiometer ausgebildet sein. Der Lagewandler 52 stellt ein der Hubwerkslage entsprechendes Signal zur Verfügung. Über den Lagegrenzwertwandler 54 läßt sich manuell eine obere Grenzlage für das Anbaugerätehubwerk einstellen. Einzelheiten eines Steuersystems für Anbauhubvorrichtungen können beispielsweise der EP-A-0 428 076 entnommen werden.

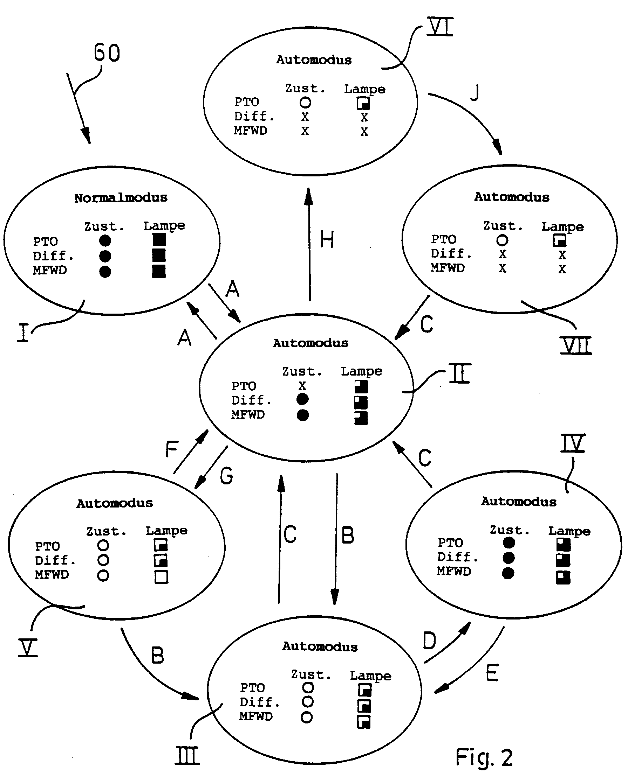

Der Steuereinheit 10 liegt eine Schaltlogik zugrunde, die aus dem Zustandsdiagramm der Fig. 2 hervorgeht. Es handelt sich um ein relativ einfach ausgebildetes Zustandsdiagramm, daß gegebenenfalls durch weitere zweckmäßige Funktionen ergänzt werden kann.

In der Fig. 2 sind sieben oval dargestellte Betriebszustände I bis VII für die beteiligten Funktionen dargestellt. Es werden folgende Funktionen gesteuert:
- PTO: Zapfwelle
- Diff.: Hinterachsdifferential
- MFWD: mechanischer Vorderradantrieb

Die Einstellungen ("Zust.") der Funktionen wurden durch leere bzw. ausgefüllte Kreise und Kreuze dargestellt. Ein ausgefüllter Kreis bedeutet, das die Funktion eingeschaltet, ein leerer Kreis, daß sie abgeschaltet ist. Bei einem Kreuz verharrt die Funktion in der Einstellung, die sie vor dem letzten Zustandswechsel eingenommen hatte.

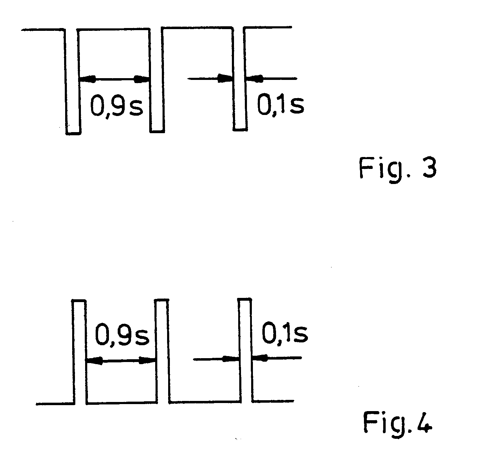

Den Funktionen sind Leuchten ("Lampen") zugeordnet, die durch Quadrate symbolisiert sind. Ein ausgefülltes bzw. leeres Quadrat bedeutet, daß die Leuchte dauerhaft an bzw. aus ist. Bei einem nur in der rechten, unteren Ecke ausgefüllten Quadrat blinkt die Leuchte im Hellblinkmodus, d. h. sie ist während einer Periode von 1 Sekunde 90% der Periodenzeit an und 10% der Periodenzeit aus (siehe Fig. 3). Ist das Quadrat bis auf seine obere, linke Ecke ausgefüllt, so blinkt die Leuchte im Dunkelblinkmodus, d. h. sie ist während einer Periode von 1 Sekunde 10% der Periodenzeit an und 90% der Periodenzeit aus (siehe Fig. 4).

Im Normalbetriebsmodus ("Normalmodus") können die Funktionen über die Schalter 12, 14 und 16 durch die Bedienungsperson eingestellt werden. Im Automatikmodus erfolgt dagegen die Einstellung der Funktionen zusätzlich nach einem vorgebbaren Programm.

Die Fig. 2 zeigt einen Ausgangszustand I, der sich beim Einschalten der Zündung (Pfeil 60) einstellt. In dem dargestellten Ausgangszustand I befindet sich das Anbaugerät in seiner unteren Stellung und die Schalter 12, 14 und 16 sind eingeschaltet, so daß in dem dargestellten Normalbetriebsmodus alle drei Funktionen eingeschaltet sind und die zugehörigen Leuchten 26, 30, 34 leuchten. Als Ausgangszustand sind für die drei Funktionen, die hier beispielhaft gewählt wurden, auch weitere nicht gezeigte Zustände möglich, die unterschiedlichen Schaltereinstellungen entsprechen und bei denen eine oder mehrere der Funktionen ausgeschaltet sind. Ist eine Funktion in einem der möglichen, aber nicht gezeigten Ausgangszustände ausgeschaltet, so wird sie in den Zuständen II bis VII, in denen der Automatikmodus aktiv ist, nicht automatisch eingeschaltet.

Durch einmaliges Betätigen des Automatikschalters 18 (Pfeil A) geht das System in den Bereitschaftszustand II über, in dem der Automatikmodus aktiv ist, das vorgebbare Programm jedoch noch nicht durchgeführt wird. Die Funktionen bleiben eingeschaltet und die Leuchten blinken im Hellblinkmodus. Durch erneutes Betätigen des Automatikschalters 18 kehrt das System in seinen Ausgangszustand I zurück.

Wird ausgehend vom Bereitschaftszustand II beispielsweise am Feldende durch den Bedienungsschalter 50 ein HEBEN-Signal erzeugt (Pfeil B), so geht das System nach Ablauf eines vorgebbaren Programms in den Aushubzustand III über. Mit dem HEBEN-Signal wird das Ausheben des Hubwerkes aus seiner Arbeitsposition in seine Transportstellung eingeleitet. Gleichzeitig wird die Differentialsperre ausgeschaltet, um das Wenden des Fahrzeuges zu ermöglichen. Erreicht das Hubwerk eine durch den Lagewandler 52 erfaßbare vorgebbare Position (vorgebbarer Prozentsatz des maximalen Hubwinkels über der Arbeitshöhe), so wird die Zapfwelle abgeschaltet. Sobald die Lage des Hubwerkes eine maximale Hubposition erreicht, die durch den Lagegrenzwertwandler 54 einstellbar ist, (Erreichen der Transportstellung), wird der Vorderradantrieb abgeschaltet. Falls nicht alle der genannten Funktionen beim Betätigen des Automatikschalters 18 aktiv waren, wird durch die Steuereinheit 10 ein entsprechend reduziertes Automatikprogramm ausgeführt. Durch Erzeugung eines SENKEN-Signals (Pfeil C) kehrt das System aus dem Aushubzustand III in seinen Bereitschaftszustand II zurück. Die Zapfwelle bleibt jedoch zunächst aus und kann nur von Hand eingeschaltet werden.

Die Einstellungen der Funktionen lassen sich bei aktiviertem Automatikmodus überfahren. So ist es beispielsweise möglich, ausgehend von dem Aushubzustand III, in dem alle Funktionen ausgeschaltet sind, eine oder mehrere der Funktionen durch Betätigung der Schalter 12, 14 und/oder 16 einzuschalten. Werden beispielsweise alle Funktionen manuell eingeschaltet (Pfeil D) so gelangt man zu dem Zustand IV. Durch Ausschalten aller Funktionen (Pfeil E) gelangt man zurück zum Aushubzustand III. Wird ausgehend vom Zustand IV das Hubwerk abgesenkt (Pfeil C), so geht das System in den Bereitschaftszustand II über, in dem die Differentialsperre und der Vorderradantrieb automatisch eingeschaltet sind, die Zapfwelle jedoch nur von Hand einschaltbar ist.

Es ist auch möglich, ausgehend vom Bereitschaftszustand II, in dem alle Funktionen eingeschaltet sind, eine oder mehrere der Funktionen durch Betätigung der Schalter 12, 14 und/oder 16 auszuschalten. Werden beispielsweise alle Funktionen manuell ausgeschaltet (Pfeil G) so gelangt man zu dem Zustand V. Durch manuelles Einschalten aller Funktionen (Pfeil F) gelangt man zurück zum Bereitschaftszustand II, in dem alle Funktionen, auch die Zapfwelle, wieder eingeschaltet sind. Wird ausgehend vom Zustand V das Hubwerk angehoben (Pfeil B), so geht das System in seinen Aushubzustand III über.

Die Funktion des Vierradantriebes ist nur dann in den Automatikmodus eingebunden, wenn sich der Vierradantriebsschalter 12 beim Aktivieren des Automatikmodus in seiner AUTO-Stellung befindet. In diesem Fall wird der Automatikmodus jedoch durch eine Betätigung der Bremsen oder durch Umschalten des Vierradantriebsschalters 12 in seine EIN- oder AUS-Stellung überfahren Beim Bremsen wird der Vierradantrieb automatisch eingeschaltet und die zugehörige Leuchte 26 geht auf Dauerlicht. Beim Lösen der Bremsen oder beim Rückstellen des Vierradantriebsschalters 12 in seine AUTO-Stellung wird die Vierradantriebsfunktion wieder zeit- und zustandsrichtig in den Automatikmodus eingeführt.

Wird das Hubwerk bei einer Fahrzeuggeschwindigkeit ausgehoben, die größer ist als beispielsweise 12 km/h (Pfeil H), so geht das System aus seinem Bereitschaftszustand II in den Schnellfahrzustand VI über, in dem die Zapfwelle ausgeschaltet, die Einstellung der übrigen Funktionen jedoch beibehalten wird. Fällt die Fahrzeuggeschwindigkeit wieder unter 12 km/h (Pfeil J), so nimmt das System den Zustand VII ein, ohne daß eine Änderung der Einstellungen der Funktionen oder des Lampenmodus erfolgt. Vom Zustand VII kehrt das System durch Senken des Hubwerkes (Pfeil C) in seine Bereitschaftsstellung II zurück. Die Zapfwelle bleibt zunächst aus und kann nur von Hand eingeschaltet werden.

## Patentansprüche

1. Steuereinrichtung zur Ansteuerung von Steuergeräten (28, 32, 36) eines Arbeitsfahrzeuges mit einer Steuereinheit (10), die mit den Steuergeräten (28, 32, 36) und mit Bedienungselementen (12, 14, 16, 18), die der Einstellung der Betriebszustände der durch die Steuergeräte (28, 32, 36) beeinflußten Funktionen dienen, sowie mit einem Steuersystem (46) für ein Anbaugerätehubwerk des Arbeitsfahrzeuges elektrisch verbunden ist, wobei die Steuereinheit (10) Mittel aufweist, die aufgrund des Betätigungssignals eines Bedienungselements (18) einen Automatikmodus zur Ansteuerung der Steuergeräte (28, 32, 36) aktivieren bzw. deaktivieren und die den aktivierten Automatikmodus aufgrund eines manuellen Betätigungssignals an das Hubwerkssteuersystems (46) in Gang setzen, um die Betriebszustände der den Steuergeräten (28, 32, 26) zugehörigen Funktionen zu ändern, **dadurch gekennzeichnet**, daß mit der Steuereinheit (10) ein von den übrigen Bedienungselementen (12, 14, 16) unabhängig betätigbarer Automatikschalter (18) zur Einstellung des Automatikmodus sowie ein Sensor (52) zur Erfassung der Hubwerkslage elektrisch in Verbindung stehen und daß bei aktiviertem Automatikmodus die Ansteuerung wenigstens eines der Steuergeräte (28, 32, 36) in Abhängigkeit der durch den Sensor (52) erfaßten Hubwerkslage nach einem vorgebbaren Programm erfolgt.

2. Steuereinrichtung nach Anspruch 1, dadurch gekennzeichnet, daß die Steuereinheit (10) Mittel aufweist, durch die bei aktiviertem Automatikmodus durch eine Rückstellung des Anbaugerätehubwerkes in seine Ausgangslage eine automatische Rückstellung wenigstens eines Steuergerätes (28, 32, 36) in seinen Ausgangsbetriebszustand nach einem vorgebbaren Programm erfolgt.

3. Steuereinrichtung nach Anspruch 1 oder 2, dadurch gekennzeichnet, daß als Steuergeräte (28, 32, 36) Betätigungsmittel für die Zuschaltung eines Allradantriebes in den Antriebsstrang, für wenigstens eine Differentialsperre und/oder für wenigstens eine Zapfwelle vorgesehen sind.

4. Steuereinrichtung nach Anspruch 3, dadurch gekennzeichnet, daß die Steuereinheit (10) Mittel enthält, durch die bei aktiviertem Automatikmodus die Differentialsperre aufgehoben wird, sobald eine Bedienungseinrichtung (50) des Anbaugerätehubwerkes in Hebeposition gebracht wird, und/oder die Zapfwelle abgeschaltet wird, sobald die Lage des Anbaugerätehubwerkes einen vorgebbaren Prozentsatz seines maximalen Hubwinkels aus der Arbeitsstellung in Richtung Heben überschreitet, und/oder der Allradantrieb abgeschaltet wird, wenn das Anbaugerätehubwerk seine Transportstellung erreicht.

5. Steuereinrichtung nach Anspruch 4, dadurch gekennzeichnet, daß die Steuereinheit (10) Mittel enthält, die mit einer sich an das Heben anschließenden Einstellung des Hubwerksteuerelementes in Senkposition den Frontantrieb und/oder die Differentialsperre automatisch wieder einschalten.

6. Steuereinrichtung nach einem der Ansprüche 3 bis 5, dadurch gekennzeichnet, daß die Steuereinheit (10) Mittel enthält, die ein automatisches Einschalten der Zapfwelle unterdrückt und das Einschalten nur durch manuelle Betätigung des Zapfbedienungselementes (16) zuläßt.

7. Steuereinrichtung nach einem der Ansprüche 1 bis 6, dadurch gekennzeichnet, daß die Steuereinheit (10) Mittel aufweist, die bei aktiviertem und/oder in Gang gesetztem Automatikmodus eine Übersteuerung des Automatikmodus durch manuelle Verstellung des Bedienungselementes (12, 14, 16) ermöglichen.

8. Steuereinrichtung nach einem der Ansprüche 1 bis 7, dadurch gekennzeichnet, daß ein mit der Steuereinheit (10) elektrisch verbundener Fahrgeschwindigkeitssensor (24) vorgesehen ist und daß die Steuereinheit (10) Mittel enthält, die bei Überschreiten einer vorgebbaren Fahrzeuggeschwindigkeit die Ausführung des Automatikmodus für auswählbare Steuergeräte (28) unterdrückt und/oder wenigstens eine Zapfwelle automatisch abschalten.

9. Steuereinrichtung nach einem der Ansprüche 1 bis 8, dadurch gekennzeichnet, daß der Automatikschalter (18) ein Tastschalter ist, der Schaltimpulse zur Umschaltung zwischen einem Normalbetriebsmodus, in dem die Ansteuerung des Steuergerätes (28, 32, 36) manuell mittels des Bedienungselementes (12, 14, 16) erfolgt, und dem Automatikmodus an die Steuereinheit (10) abgibt.

10. Steuereinrichtung nach einem der Ansprüche 1 bis 9, dadurch gekennzeichnet, daß wenigstens eine durch die Steuereinheit (10) ansteuerbare, einem Steuergerät (28, 32, 36) zugeordnete Leuchte (26, 30, 34) vorgesehen ist, die den jeweiligen Betriebszustand des Steuergerätes (28, 32, 36) und/oder des jeweiligen Steuermodus der Steuereinheit (10) anzeigt.

11. Steuereinrichtung nach Anspruch 10, dadurch gekennzeichnet, daß die Steuereinheit (10) Mittel aufweist, durch die die Leuchte (26, 30, 34) entsprechend dem Betriebszustand des Steuergerätes (28, 32, 36) und/oder des Steuermodus einschaltbar, ausschaltbar, in einem Hellblinkmodus und/oder in einem Dunkelblinkmodus betreibbar ist.

12. Steuereinrichtung nach Anspruch 10 oder 11, dadurch gekennzeichnet, daß die Steuereinheit (10) Mittel aufweist, durch die die Leuchte (26, 30, 34) in einen Hellblinkmodus geschaltet wird, sofern der Automatikmodus aktiviert und das in den Automatikmodus eingebundene Steuergerät (28, 32, 36) eingeschaltet ist, und/oder daß die Steuereinheit (10) Mittel aufweist, durch die die Leuchte (26, 30, 34) in einen Dunkelblinkmodus geschaltet wird, sofern der Automatikmodus aktiviert und das in den Automatikmodus eingebundene Steuergerät (28, 32, 36) ausgeschaltet ist.

13. Steuereinrichtung nach einem der Ansprüche 1 bis 12, gekennzeichnet durch Überwachungsmittel, die die Funktionalität der in die Steuerung einbezogenen Bauelemente laufend überwachen und bei Auftreten von Fehlern wenigstens eine Leuchte im Blinkmodus mit einem Puls-Pausen-Verhältnis von in etwa 1:1 ansteuert.

14. Steuereinrichtung nach einem der Ansprüche 1 bis 13, dadurch gekennzeichnet, daß die Steuereinheit (10) Mittel (38) zur Erzeugung von akustischen Signalen aufweist, die den Steuermodus und/oder Fehler signalisieren.

## Claims

1. A control arrangement for controlling control devices (28, 32, 36) of an work vehicle with a control unit (10) which is connected electrically to the control devices (28, 32, 36) and to operator elements (12, 14, 16, 18) which serve for setting the operating state of the functions controlled by the control devices (28, 32, 36), as well as a control system (46) for an implement lift hitch of the work vehicle, wherein the control unit (10) comprises means which activate and de-activate an automatic mode for controlling the control devices (28, 32, 36) in response to the actuating signal from an operator element (18) and which put the automatic mode into operation in response to a manual actuating signal to the lift hitch control system (46), in order to alter the operating states of the functions pertaining to the control devices (28, 32, 36), characterized in that an automatic switch (18) operable independently of the other operator elements (12, 14, 16) for setting the automatic mode and a sensor (52) for detecting the lift hitch position are electrically connected to the control unit (10), and in that when the automatic mode is activated, the control of at least one of the control devices (28, 32, 36) is effected in dependence on the lift hitch position detected by the sensor (52) in accordance with a predetermined program.

2. A control arrangement according to claim 1, characterized in that the control unit (10) comprises means which effect an automatic reset of at least one control device (28, 32, 36) into its initial operating state according to a predetermined program through reset of the implement lift hitch into its starting position with the automatic mode activated.

3. A control arrangement according to claim 1 or 2, characterized in that actuating means for switching a all-wheel drive into the drive train, for a differential lock and/or for at least one PTO shaft are provided as control devices (28, 32, 36).

4. A control arrangement according to claim 3, characterized in that the control unit (10) comprises means whereby in the activated automatic mode the differential lock is taken off as soon as an operating device (50) of the implement lift hitch is brought into lift position, and/or the PTO shaft is turned off as soon as the position of the implement lift hitch exceeds a predetermined percentage of its maximum lift angle from the working position in the direction of lifting, and/or the all-wheel drive is turned off when the implement lift hitch reaches its transport position.

5. A control arrangement according to claim 4, characterized in that the control unit (10) comprises means which, on setting the lift hitch control element to the lowering position following lifting, automatically switch on the front wheel drive and/or the differential lock again.

6. A control arrangement according to any of claims 3 to 5, characterized in that the control unit (10) comprises means which prevent automatic switching on of the PTO shaft and only allow switching on again through manual actuation of the PTO operating element (16).

7. A control arrangement according to claim1 1 to 6, characterized in that the control unit (10) comprises means which with the automatic mode activated and/or put into operation facilitate manual overriding of the automatic mode by manual movement of the operating element (12, 14, 16).

8. A control arrangement according to any of claims 1 to 7, characterized in that a vehicle speed sensor (24) is provided, connected electrically to the control unit (10) and in that the control unit (10) comprises means which prevents performance of the automatic mode for selectable control devices (28) and/or automatically switches off at least one PTO shaft on exceeding a predetermined vehicle speed.

9. A control arrangement according to any of claims 1 to 8, characterized in that the automatic switch (18) is a push-button switch which issues switch pulses to the control unit (10) for switching between a normal operating mode, in which the control of the control devices (28, 32, 36) is effected manually by means of the operating element (12, 14, 16), and the automatic mode.

10. A control arrangement according to any of claims 1 to 9, characterized in that at least one lamp (26, 30, 34) associated with a control device (28, 32, 36) and controlled by the control unit (10) is provided and indicates the current operating state of the control device (28, 32, 36) and/or the current control mode of the control unit (10).

11. A control arrangement according to claim 10, characterized in that the control unit (10) comprises means through which the lamp (26, 30, 34) can be switched on, switched off operated in a bright flashing mode and/or operated in a dim flashing mode, in accordance with the operating state of the control device (28, 32, 26) and/or the control mode.

12. A control arrangement according to claim 10 or 11, characterized in that the control unit (10) comprises means whereby the lamp (26, 30, 34) is switched to a bright flashing mode when the automatic mode is activated and the control device (28, 32, 26) involved in the automatic mode is switched on, and/or the control unit (10) comprises means whereby the lamp (26, 30, 34) is switched into a dim flashing mode when the automatic mode is activated and the control device (28, 32, 36) involved in the automatic mode is switched off.

13. A control arrangement according to any of claims 1 to 12, characterized by monitoring means which constantly monitor the functionality of the components involved in the control and turn on at least one lamp in flashing mode with a mark-space ratio of about 1:1 on occurrence of errors.

14. A control arrangement according to any of claims 1 to 13, characterized in that the control unit (10) comprises means (38) for generating acoustic signals, which signal the control mode and/or errors.

## Revendications

1. Dispositif de commande pour la commande d'appareils de commande (28,32,36) d'un véhicule de travail comportant une unité de commande (10), qui est reliée électriquement aux appareils de commande (28,32,36) et aux éléments d'actionnement (12,14,16,18), qui servent à réaliser le réglage des états de fonctionnement des fonctions influencées par les appareils de commande (28,32,36), et un système de commande (46) pour un mécanisme de levage d'outils portés du véhicule de travail, l'unité de commande (10) comportant des moyens qui, sur la base du signal d'actionnement d'un élément d'actionnement (18), activent et désactivent un mode automatique pour la commande des appareils de commande (28,32,36) et qui mettent en oeuvre le mode automatique activé sur la base d'un signal manuel d'actionnement appliqué au système (46) de commande du mécanisme de levage, pour modifier les états de fonctionnement des fonctions associées aux appareils de commande (28,32,36), caractérisé en ce qu'un interrupteur automatique (18), qui peut être actionné indépendamment des autres éléments d'actionnement (12,14,16) et qui sert à régler le mode automatique ainsi qu'un capteur (52) servant à détecter la position du mécanisme de levage sont reliés électriquement à l'unité de commande (10) et que, dans le cas où un mode automatique est activé, la commande d'au moins un appareil de commande (28,32,36) s'effectue selon un programme pouvant être prédéterminé, en fonction de la position du mécanisme de levage détectée par le capteur (52).

2. Dispositif de commande selon la revendication 1, caractérisé en ce que l'unité de commande (10) comporte des moyens, à l'aide desquels, lorsque le mode automatique est activé, un rappel automatique d'au moins un appareil de commande (28,32,36) dans son état de fonctionnement initial s effectue selon un programme pouvant être prédéterminé, au moyen d'un rappel du mécanisme de levage des outils portés, dans sa position initiale.

3. Dispositif de commande selon la revendication 1 ou 2, caractérisé en ce qu'il est prévu comme appareils de commande (28,32,36), des moyens d'actionnement pour le branchement d'un système d'entraînement toutes roues motrices dans l'unité d'entraînement, pour au moins un dispositif de blocage de différentiel et/ou pour au moins un arbre de prise de force.

4. Dispositif de commande selon la revendication 3, caractérisé en ce que l'unité de commande (10) contient des moyens, à l'aide desquels, lorsque le mode automatique est activé, le dispositif de blocage de différentiel est ouvert dès qu'un dispositif d'actionnement (50) du mécanisme de levage des outils portés est amené dans la position de levage, et/ou l'arbre de la prise de force est débranché dès que la position du mécanisme de levage des outils portés dépasse un pourcentage pouvant être prédéterminé de son angle maximum de levage à partir de la position de travail dans le sens du levage, et/ou que le dispositif d'entraînement toutes roues motrices est débranché lorsque le mécanisme de levage des outils portés atteint sa position de transport.

5. Dispositif de commande selon la revendication 4, caractérisé en ce que l'unité de commande (10) contient des moyens qui, lors d'un réglage de l'élément de commande du mécanisme de levage, qui intervient à la suite du levage, branche à nouveau automatiquement, dans sa position abaissée, le dispositif d'entraînement frontal et/ou le dispositif de blocage de différentiel.

6. Dispositif de commande selon l'une des revendications 3 à 5, caractérisé en ce que l'unité de commande (10) contient des moyens, qui suppriment un engagement automatique de l'arbre de prise de force et permettent l'enclenchement uniquement par actionnement manuel de l'élément (7) d'actionnement de l'arbre de prise de force.

7. Dispositif de commande selon l'une des revendications 1 à 6, caractérisé en ce que l'unité de commande (10) comprend des moyens qui, lorsque le mode automatique est activé et/ou est mis en oeuvre, permettent une surmodulation du mode automatique au moyen d'un réglage manuel de l'élément d'actionnement (12,14,16).

8. Dispositif de commande selon l'une des revendications 1 à 7, caractérisé en ce qu'il est prévu un capteur (24) de la vitesse de déplacement, qui est relié électriquement à l'unité de commande (10), et que l'unité de commande (10) contient des moyens qui, lors du dépassement d'une vitesse pouvant être prédéterminée du véhicule, suppriment l'exécution du mode automatique pour des appareils de commande (28) pouvant être sélectionnés et/ou débranchent automatiquement au moins un arbre de prise de force.

9. Dispositif de commande selon l'une des revendications 1 à 8, caractérisé en ce que l'interrupteur automatique (18) est un interrupteur à touche, qui délivre à l'unité de commande (10) des impulsions de commutation pour réaliser une commutation entre un mode de fonctionnement normal, dans lequel la commande de l'appareil de commande (28,32,36) s'effectue manuellement à l'aide de l'élément d'actionnement (12,14,16), et le mode automatique.

10. Dispositif de commande selon l'une des revendications 1 à 9, caractérisé en ce qu'il est prévu au moins une lampe (26,30,34) qui peut être commandée par l'unité de commande (10) et est associée à un appareil de commande (28,32,36) et qui indique l'état de fonctionnement respectif de l'appareil de commande (28,32,36) et/ou du mode de commande respectif de l'unité de commande (10).

11. Dispositif de commande selon la revendication 10, caractérisé en ce que l'unité de commande (10) comprend des moyens, à l'aide desquels la lampe (26,30,34) peut être allumée, éteinte, fonctionner dans un mode de clignotement lumineux et/ou dans un mode de clignotement sombre, en fonction de l'état de fonctionnement de l'appareil de commande (28,32,36) et/ou du mode de commande.

12. Dispositif de commande selon la revendication 10 ou 11, caractérisé en ce que l'unité de commande (10) comprend des moyens à l'aide desquels la lampe (30,34) est branchée dans un mode de clignotement lumineux dès que le mode automatique est activé, que l'appareil de commande (28,32,36) associé au mode automatique est branché, et/ou que l'unité de commande (10) comporte des moyens à l'aide desquels la lampe (28,30,34) est branchée dans un mode de clignotement sombre, dans la mesure où le mode automatique est activé et où l'appareil de commande (28,32,36) lié au mode automatique est débranché.

13. Dispositif de commande selon l'une des revendications 1 à 12, caractérisé par des moyens de contrôle, qui contrôlent en permanence le caractère fonctionnel des composants insérés dans la commande et, lors de l'apparition d'erreurs, commandent au moins une lampe dans le mode de clignotement avec un taux d'impulsions égal à environ 1:1.

14. Dispositif de commande selon l'une des revendications 1 à 13, caractérisé en ce que l'unité de commande (10) comporte des moyens (38) pour produire des signaux acoustiques, qui signalent le mode de commande et/ou des défauts.
